# EUROPEAN PATENT SPECIFICATION

(11) **EP 4 552 933 B1**
(45) Date of publication and mention of the grant of the patent: **07.10.2026**
(21) Application number: 24210815.7
(22) Date of filing: 05.11.2024
(51) Int. Cl.: B60T 7/20, B60T 8/17, B60T 8/1766, B60T 8/18, B60T 8/30, B60T 8/32, B60T 11/10, B60T 11/12, B60T 15/04, B60T 15/18, B60T 15/46, B60T 15/60

(54) **CONTROL DEVICE OF THE BRAKING OF A TRAILER WITH HYDRAULIC SUSPENSION**
STEUERVORRICHTUNG ZUM ABBREMSEN EINES ANHÄNGERS MIT HYDRAULISCHER STOSSDÄMPFUNG
SYSTEME DE CONTROLE DE FREINAGE POUR ATTELAGE AVEC SOSPENSIONS HYDRAULIQUES

(30) Priority: 10.11.2023 IT 202300023841
(43) Date of publication of application: 14.05.2025
(73) Proprietor: SAFIM S.r.l., 41123 Modena (MO) (IT)
(72) Inventor: COLLAVINI, Maurizio, 41123 MODENA (IT)
(74) Representative: Zoli, Filippo

(56) References cited:
- EP-A1- 0 067 253
- EP-A1- 2 876 009
- EP-A1- 3 000 672
- EP-A1- 3 312 066
- WO-A1-2022/144295
- US-A1- 2022 355 772

## Description

### Technical Field

The present invention relates to a control device of the braking of a trailer with hydraulic suspension.

### Background Art

Existing directives relating to the approval of agricultural and forestry vehicles require that any towed vehicle in which the difference between the load and the unload condition exceeds a predefined value (10 percent) must be provided with an automatic brake corrector, which is a device capable of automatically varying the pressure in the braking system of the towed vehicle depending on the loading conditions of the vehicle itself.

In particular, in trailers provided with mechanical suspensions, where therefore the height of the trailer frame above the ground changes depending on the load, the use is known of braking correction devices which are mechanically connected to the frame of the trailer itself so as to transfer the position of the frame itself to a regulator which is adapted to partialize the flow of the work fluid that is fed to the braking system of the trailer. Thus, the more the height of the trailer from the ground decreases as a result of the high load, the greater the pressure of the work fluid that is sent to the braking system of the trailer.

On agricultural or forestry vehicles, hydraulic-type suspensions are very widespread today, i.e., those provided with hydraulic cylinders adapted to control the height of the trailer, wherein an increase in the work load results in an increase in the pressure within the cylinders themselves while the height of the trailer frame remains almost constant as the load changes. This therefore results in the inability to mechanically transfer the displacement of the trailer height to the braking correction device, thus making the devices used for trailers with mechanical suspension unsuitable for use as such in trailers with hydraulic suspensions.

Another drawback is that in emergency situations, i.e., wherein the hydraulic connection between the vehicle and the trailer breaks, the hydraulic pressure reaching the hydraulic suspension of the trailer is effectively zeroed out, making it unusable to proportionally activate the emergency braking of the trailer itself. A braking correction device is known from EP 3312066 A1.

### Description of the Invention

The main aim of the present invention is to devise a control device of the braking of a trailer with hydraulic suspension which allows the trailer's braking to be adjusted proportionally to the pressure of the relevant hydraulic suspension. Within this aim, one object of the present invention is to allow the maximum trailer's braking under emergency conditions when the pressure within the hydraulic cylinders of the relevant suspension is zero.

Another object of the present invention is to devise a control device of the braking of a trailer with hydraulic suspension which allows the aforementioned drawbacks of the prior art to be overcome within the framework of a simple, rational, easy and effective to use as well as affordable solution.

The aforementioned objects are achieved by this control device of the braking of a trailer with hydraulic suspension according to claim 1.

### Brief Description of the Drawings

Other characteristics and advantages of the present invention will become more apparent from the description of a preferred, but not exclusive embodiment of a control device of the braking of a trailer with hydraulic suspension, illustrated by way of an indicative, yet non-limiting example in the accompanying tables of drawings wherein:
Figure 1 is a side elevation view of a device according to the invention in a first operating condition;
Figure 2 is a cross-sectional view of the cylinder of the device in Figure 1;
Figure 3 is a side elevation view of a device according to the invention in a second operating condition;
Figure 4 is a cross-sectional view of the cylinder of the device in Figure 3;
Figure 5 is a side elevation view of a device according to the invention in a third operating condition;
Figure 6 is a cross-sectional view of the cylinder of the device in Figure 5.

### Embodiments of the Invention

With particular reference to these figures, reference numeral 1 globally denotes a control device of the braking of a trailer with hydraulic suspension.

The device 1 comprises at least one braking correction device 2 provided with:
- at least one supply port 3 (not visible in detail) of a pressurized fluid (air or oil) and with at least one output port 4 (not visible in detail) of the pressurized fluid connectable to the braking system of a trailer,
- valve means 5 placed between the supply port 3 and the output port 4 and adapted to adjust the pressure of the fluid flowing through the output port 4 and
- at least one control lever 6 of the valve means 5, wherein such control lever 6 is movable between a position of maximum braking, wherein it operates on the valve means 5 so that the pressure of the work fluid flowing through the output port 4 is maximum, and a position of minimum braking, wherein it operates on the valve means 5 so that the pressure of the work fluid flowing through the output port 4 is minimum.

The correction device 2 is of a type known to the technician in the field.

One example of the correction device 2 is known from EP3312066A1, to which reference is made for completeness' sake.

More specifically, the supply port 3 is connectable to the control line of the trailer and adapted to transfer the pressurized work fluid from the braking system of the towing vehicle to the braking system of the trailer.

According to the invention, the device 1 then comprises at least one fluid-operated cylinder 7, preferably a plurality of cylinders 7, comprising a body 8 and a piston 9 housed within the body 8 in a sliding manner and provided with at least one rod 10 protruding from the body itself, wherein a thrust chamber 11 is defined between the body 8 and the piston 9 which chamber is provided with a delivery port 12 for the flow of a pressurized work fluid and connectable to the hydraulic suspension of the trailer.

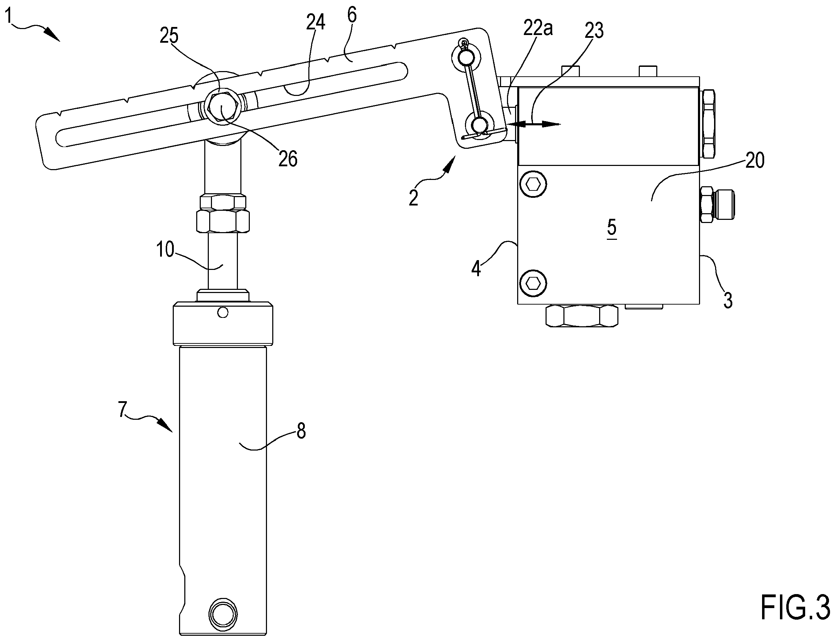

As visible from Figure 3, the body 8 has a top 8a, through which the rod 10 is inserted, a lateral wall 8b and a bottom 8c opposite the top 8a.

The rod 10 moves between an extended configuration, wherein its portion outside the body 8 is maximum, and a retracted configuration, wherein its portion outside the body 8 is minimum, depending on the pressure of the work fluid within the thrust chamber 11.

According to the invention, the rod 10 is mechanically connected to the control lever 6 to bring it to the position of maximum braking as a result of its displacement towards the extended configuration and to the position of minimum braking as a result of its displacement towards the retracted configuration. More particularly, the correction device 2 comprises a containment body 20, e.g. of the box type, of the valve means 5.

The control lever 6 is arranged outside the containment body 20 and operates on the valve means 5 by means of a control element 22 which is associated with the containment body 20 in a sliding manner along a control direction 23. The control element 22 has a protruding portion 22a on the outside of the containment body 20 and connected to the control lever 6. The control element 22 is movable as a result of the displacement of the control lever 6 between an extended position, wherein the protruding portion 22a has maximum extension, and a retracted position, wherein the protruding portion 22a has minimum extension. The extended position and the retracted position of the control element 22 correspond to the position of maximum braking and to the position of minimum braking of the control lever 6, respectively. In other words, the control element 22 moves to the extended position and to the retracted position as a result of the displacement of the control lever 6 to the position of maximum braking and to the position of minimum braking, respectively.

In more detail, the protruding portion 22a is hinged to the control lever 6. Preferably, the connection zone of the rod 10 to the control lever 6 is adjustable. By varying the position of the connection zone of the rod 10 with respect to the control lever 6 the value of the fluid output pressure is changed.

More particularly, the control lever 6 has a slit 24, the rod 10 has a connecting element 25 inserted within the slit 24 in a sliding manner, and temporary fastening means 26 are provided, e.g., of the threaded type, of the connecting element 25 with respect to the slit 24. As can be easily appreciated by the technician in the field, the connecting element 25 may be of the type of a threaded stud and the fastening means 26 of the type of a nut.

According to the invention, the cylinder 7 comprises first elastic means 16 adapted to counteract the displacement of the rod 10 towards the extended configuration.

In the preferred embodiment shown in the figures, the first elastic means 16 are contained within the thrust chamber 11. Appropriately, the first elastic means 16 are placed between the body 8 and the rod 10.

Alternative embodiments cannot however be ruled out wherein the first elastic means 16 may be housed within the body 8 and isolated from the thrust chamber 11.

Still according to the invention, the cylinder 7 comprises at least one guiding element 17 housed within the body 8 in a sliding manner and movable between a raised position, wherein it is moved close to the top 8a of the body 8 and the volume of the thrust chamber 11 is minimum, and a lowered position, wherein it is moved close to the bottom 8c of the body 8 and the volume of the thrust chamber 11 is maximum. The thrust chamber 11 is defined between the top 8a of the body 8 and the guiding element 17.

The rod 10 is associated movable by shifting with the guiding element 17. Preferably, the guiding element 17 defines a housing seat 21 of the rod 10. More specifically, the rod 10 is inserted within the housing seat 21 in a sliding manner. In particular, the guiding element 17 is substantially glass-shaped.

In the embodiment shown in the figures, the housing seat 21 contains, at least partly, the first elastic means 16.

The cylinder 7 also comprises second elastic means 19 adapted to counteract the displacement of the guiding element 17 from the raised position towards the lowered position.

More particularly, the second elastic means 19 are arranged externally to the first elastic means 16 and are inserted into the gap defined between the housing seat 21 and the lateral walls 8b of the body 8.

More particularly, the second elastic means 19 are placed between the bottom 8c of the body 8 and the guiding element 17.

In detail, both the guiding element 17 and the rod 10 have a corresponding usable surface, identified in Figure 3 by reference numbers 17a and 10a respectively, facing the thrust chamber 11 and on which the pressure of the work fluid entering through the delivery port 12 operates.

The usable surfaces 17a and 10a of the guiding element 17 and of the rod 10 face each other.

Appropriately, the bottom wall 21a of the housing seat 21 defines at least partly the usable surface 17a of the guiding element 17 and is adapted to interact with the usable surface 10a of the rod 10.

When the pressure of the work fluid contained in the thrust chamber 11 is less than a predefined calibration value V_{T}, the force exerted on the guiding element 17 and on the rod 10 is greater than the force exerted on the opposite side by the second elastic means 19 and less than the force exerted on the opposite side by the first elastic means 16, respectively. It follows, therefore, that when the value of the work fluid pressure remains below the calibration value V_{T}, the second elastic means 19 are compressed as a result of the force exerted by the work fluid on the guiding element 17, which then moves towards the lowered position, while the first elastic means 16 move towards the home configuration. In other words, the equivalent pressure exerted by the first elastic means 16 on the rod 10 and that exerted by the second elastic means 19 on the guiding element 17 are greater and less than the pressure of the work fluid within the thrust chamber 11, respectively. In this operating condition, the rod 10 moves locked together with the guiding element 17 displacing, therefore, towards the corresponding retracted configuration.

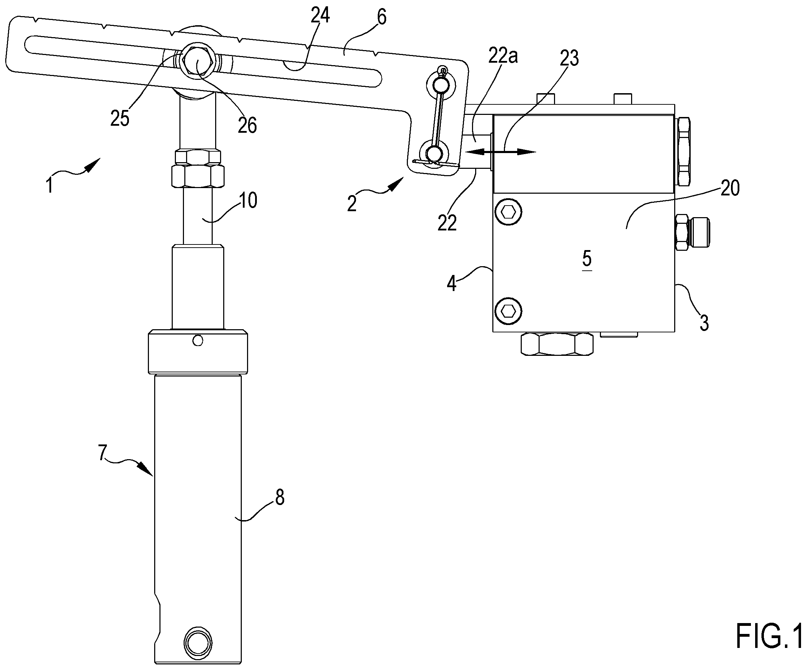

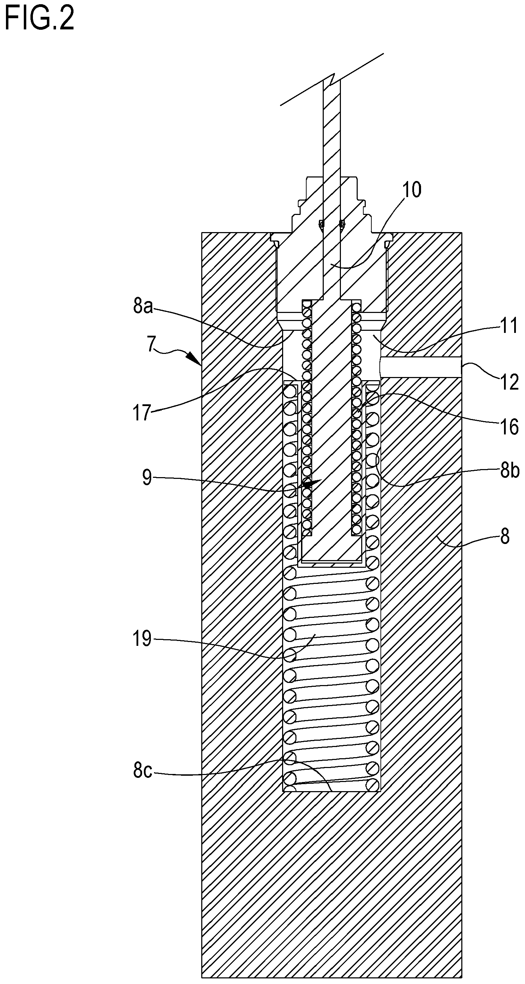

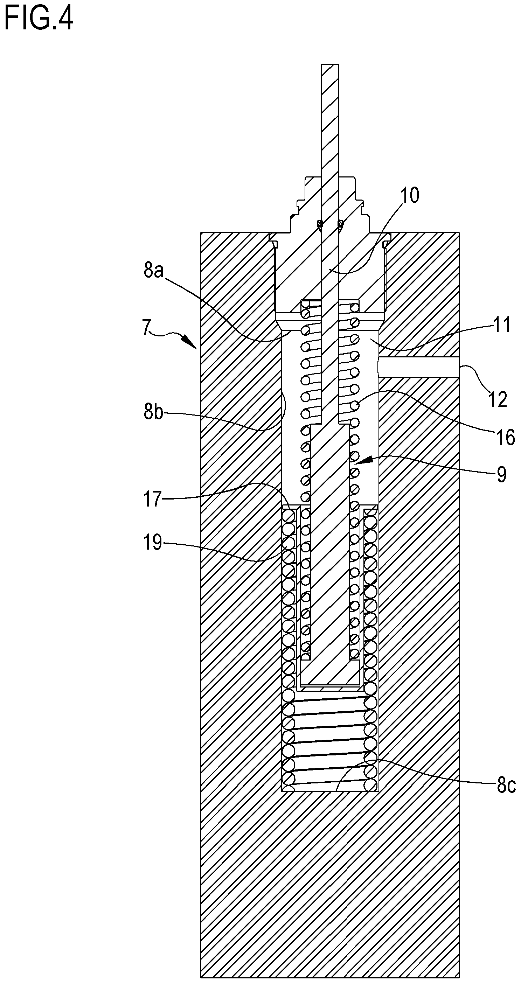

In the embodiment shown in the figures, starting from the no-pressure condition (Figures 1 and 2), the increase in pressure within the thrust chamber 11 leads to the displacement of the guiding element 17 to the lowered position as a result of the force exerted by the work fluid present in the thrust chamber 11 and the concomitant displacement of the rod 10 towards the retracted configuration as a result of the action of the first elastic means 16 (Figures 3 and 4).

In more detail, as the pressure of the work fluid within the thrust chamber 11 increases, while remaining below the calibration value V_{T}, the guiding element 17 moves towards the lowered position and the rod 10 moves locked together with the guiding element itself, close to the corresponding retracted configuration. Conversely, as the pressure inside the thrust chamber 11 decreases, remaining below the calibration value V_{T}, the guiding element 17 moves towards the raised position and the rod 10 moves locked together thereto, that is, towards the corresponding extended configuration. When the pressure of the work fluid contained within the thrust chamber 11 reaches the calibration value V_{T}, the rod 10 is in the retracted configuration as a result of the displacement of the guiding element 17 to the lowered position. At the moment when the pressure of the work fluid contained in the thrust chamber 11 exceeds the calibration value V_{T}, the force exerted on the rod 10 exceeds the force exerted on the opposite side by the first elastic means 16 and the rod 10 moves towards the extracted position by compressing the first elastic means themselves, while the guiding element 17 remains in the lowered position.

When the pressure of the work fluid contained within the thrust chamber 11 is reduced to zero, e.g. suddenly, and the guiding element 17 is in the lowered position (Figures 3 to 6), the force exerted on the guiding element 17 is less than the force exerted on the opposite side by the second elastic means 19, which extend to bring the guiding element itself to the raised position (thus reaching the position shown in Figures 1 and 2).

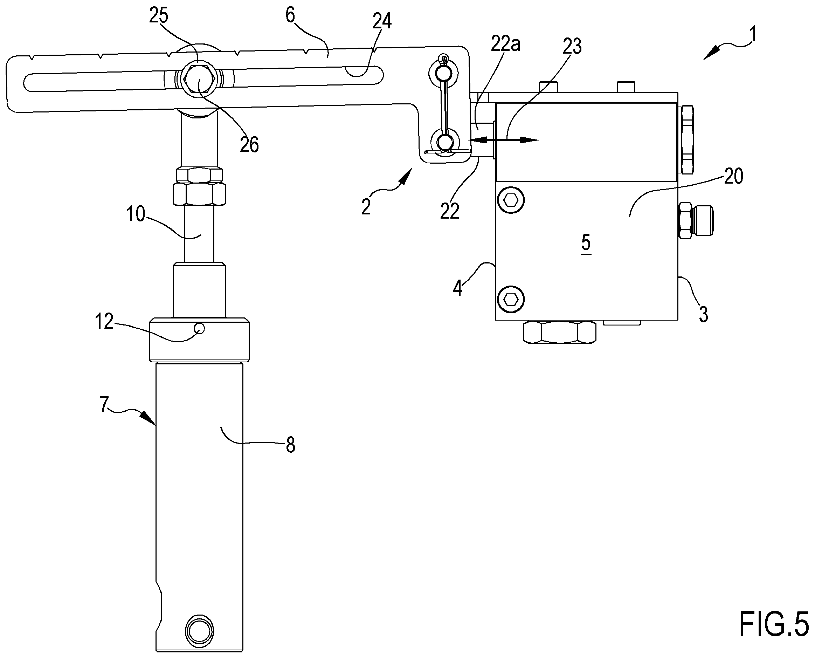

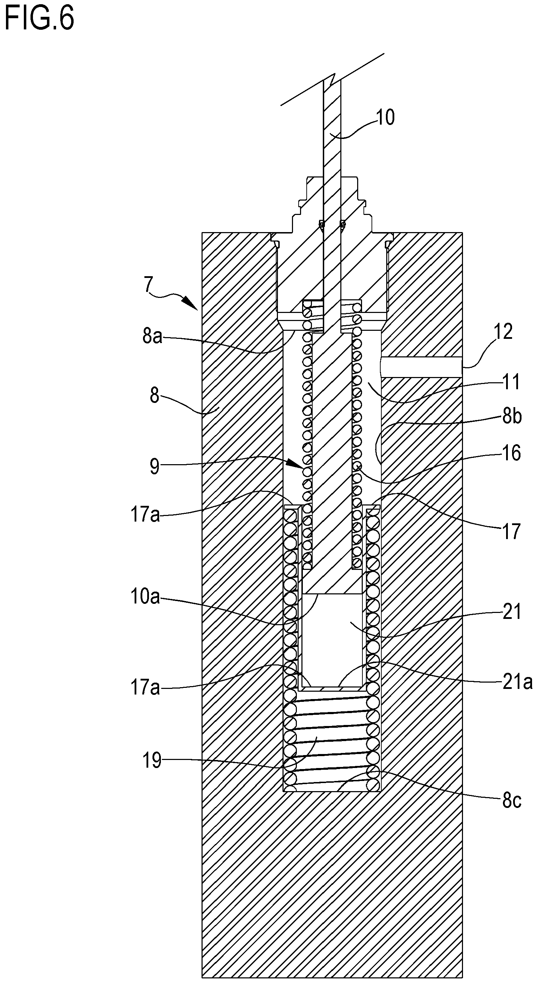

If the pressure within the thrust chamber 11 drops abruptly from a value above the calibration value V_{T} to zero, it happens that the first elastic means 16, which were in a condition of at least partial compression (Figures 5 and 6), extend returning to the home condition and, at the same time, the second elastic means 19 also extend. Therefore, in this peculiar emergency condition, the drastic drop in pressure within the thrust chamber 11 causes the rod 10 to displace towards the retracted configuration, as a result of the extension of the first elastic means 16, and at the same time the guiding element 17 to displace towards the raised position, as a result of the extension of the second elastic means 19, which then returns the rod 10 to the extracted configuration (achieving the configuration shown in Figures 1 and 2).

The operation of the device according to the invention is as follows.

As a result of the increased load on the trailer and the consequent increase in pressure within the hydraulic cylinders of the corresponding suspensions, the pressure of the work fluid inside the thrust chamber increases.

Initial pressure growth causes compression of the second elastic means 19 and the subsequent displacement of the guiding element 17 towards the lowered position. The first elastic means 16, on the other hand, extend towards the home configuration, since the force exerted by the work fluid on the usable surface 10a is not sufficient to overcome the force exerted by the first elastic means themselves, and the rod 10 is pushed by the first elastic means 16 towards the retracted configuration, actually moving locked together with the guiding element 17.

At the moment when the pressure in the thrust chamber 11 achieves the calibration value V_{T}, the guiding element 17 is in the lowered position and the rod 10 is in the retracted configuration.

Once the calibration value V_{T} is exceeded, the force exerted by the fluid on the rod 10 is able to compress the first elastic means 16 thus causing the relevant displacement of the rod 10 with respect to the guiding element 17, which remains in the lowered configuration, close to the extended configuration. Under this operating condition, the bottom of the rod 10 is spaced apart from the bottom of housing seat 21 as a result of the compression of the first elastic means 16 (Figures 5 and 6).

As can be easily appreciated, the greater the pressure within the thrust chamber 11 increases, the greater the portion of the rod 10 that escapes from the body 8 and, therefore, the work fluid pressure that is sent to the trailer braking system through the correction device 2.

Similarly, the decrease in pressure within the thrust chamber 11 causes the rod 10 to move towards the retracted configuration and, thus, a reduction in the pressure of the work fluid sent to the trailer braking system through the correction device 2.

At the moment when the pressure drops below the calibration value V_{T}, the first elastic means 16 move (if they have not already reached it) to the home condition (i.e., to the extended configuration), since the force exerted on the rod 10 is no longer able to overcome the force exerted on the opposite side by the first elastic means themselves, and the second elastic means 19 extend as the pressure decreases by pushing the guiding element 17 towards the raised position. As a result of the interaction between the guiding element 17 and the rod 10, the latter is dragged towards the relevant extended configuration.

It follows, therefore, that should the pressure within the thrust chamber 11 be reduced to zero (e.g., as a result of any breaking of the hydraulic suspensions or of the hydraulic connection between the suspensions and the cylinder 7) the rod 10 would be pushed towards the relevant extended configuration so as to ensure the maximum braking condition of the trailer.

It has in practice been ascertained that the described invention achieves the intended objects, and in particular, the fact is emphasized that the control device of the braking of a trailer covered by the present invention enables the braking of a trailer with hydraulic suspensions to be automatically adjusted depending on its loading conditions.

Specifically, the device according to the invention allows the pressure signal from the hydraulic suspensions to be converted into a physical displacement which enables a mechanical braking correction device to be activated.

Again, the construction of a piston consisting of two parts (guiding element and rod) that are mutually movable and the presence of two different elastic means each operating on a relevant part of the piston and having different stiffnesses makes it possible to ensure, on the one hand, that the trailer is braked in proportion to its load and, on the other hand, that under emergency conditions, i.e., sudden zeroing of the pressure coming from the hydraulic suspensions, the trailer is braked with the maximum possible braking pressure.

## Claims

1. Control device (1) of the braking of a trailer with hydraulic suspension, comprising:
- at least one braking correction device (2) provided with at least one supply port (3) of a pressurized fluid and with at least one output port (4) of the pressurized fluid connectable to the braking system of a trailer, valve means (5) placed between said supply port (3) and said output port (4) and adapted to adjust the pressure of the fluid flowing through said output port (4) and
at least one control lever (6) of said valve means (5), wherein said control lever (6) is movable between a position of maximum braking, wherein it operates on said valve means (5) so that the pressure of the work fluid flowing through said output port (4) is maximum, and a position of minimum braking, wherein it operates on said valve means (5) so that the pressure of the work fluid flowing through said output port (4) is minimum;
- at least one fluid-operated cylinder (7) comprising a body (8) and a piston (9) housed within said body (8) in a sliding manner and provided with at least one rod (10) wherein a thrust chamber (11) is defined between said body (8) and said piston (9) which chamber is provided with a delivery port (12) for the flow of a work fluid under pressure and connectable to the hydraulic suspension of the trailer,
**characterized by** the fact that said rod (10) protrudes from the body (8), moving between an extended configuration, wherein its portion outside the body (8) is maximum, and a retracted configuration, wherein its portion outside the body (8) is minimum, depending on the pressure of the work fluid in said thrust chamber (11);
by the fact that said rod (10) is mechanically connected to said control lever (6) to bring it to the position of maximum braking as a result of its displacement towards the extended configuration and to the position of minimum braking as a result of its displacement towards the retracted configuration,
by the fact that said cylinder (7) comprises first elastic means (16) adapted to counteract the displacement of said rod (10) towards the extended configuration, wherein said cylinder (7) comprises at least one guiding element (17) housed within said body (8) in a sliding manner and movable between a raised position, wherein it is moved close to the top (8a) of said body (8) and the volume of said thrust chamber (11) is minimum, and a lowered position, wherein it is moved close to the bottom (8c) of said body (8) and the volume of said thrust chamber (11) is maximum, and by the fact that said rod (10) is associated movable by shifting with said guiding element (17), and
by the fact that said cylinder (7) comprises second elastic means (19) adapted to counteract the displacement of said guiding element (17) from the raised position towards the lowered position.

2. Device (1) according to claim 1, **characterized by** the fact that said second elastic means (19) are placed between the bottom (8c) of said body (8) and said guiding element (17).

3. Device (1) according to one or more of the preceding claims, **characterized by** the fact that said guiding element (17) and said rod (10) have a corresponding usable surface (17a ,10a) facing said thrust chamber (11), and **characterized by** the fact that, when the pressure of the work fluid contained in the thrust chamber (11) is less than a predefined calibration value, the force exerted on said guiding element (17) and on said rod (10) is greater than the force exerted on the opposite side by said second elastic means (19), causing the compression of said second elastic means themselves and the displacement of said guiding element (17) towards the lowered position, and less, respectively, than the force exerted on the opposite side by said first elastic means (16), which are brought to the home configuration.

4. Device (1) according to claim 3, **characterized by** the fact that when the pressure of the work fluid contained in said thrust chamber (11) varies, remaining below said calibration value (V_{T}), said guiding element (17) displaces towards the lowered position and towards the raised position as a result of the increase and decrease in pressure, respectively, in said thrust chamber (11), said rod (10) moving blocked together with said guiding element (17) towards the retracted configuration and towards the extended configuration, respectively.

5. Device (1) according to one or more of the preceding claims, **characterized by** the fact that said first elastic means (16) are placed between said body (8) and said rod (10).

6. Device (1) according to one or more of claims 3 to 5, **characterized by** the fact that, when the pressure of the work fluid contained in said thrust chamber (11) reaches said calibration value (V_{T}), said rod (10) is in the retracted configuration as a result of the displacement of said guiding element (17) to the lowered position, and by the fact that, when the pressure of the work fluid contained in said thrust chamber (11) exceeds said calibration value (V_{T}), the force exerted on said rod (10) exceeds the force exerted on the opposite side by said first elastic means (16) and said rod (10) displaces towards the extracted position by compressing said first elastic means (16), said guiding element (17) remaining in the lowered position.

7. Device (1) according to claim 6, **characterized by** the fact that, when the pressure of the work fluid contained in said thrust chamber (11) is set to zero and said guiding element (17) is in the lowered position, the force exerted on said guiding element (17) is less than that exerted on the opposite side by the second elastic means (19) which extend by bringing the guiding element itself to the raised position.

8. Device (1) according to one or more of the preceding claims, **characterized by** the fact that the usable surface of said rod (10) faces the usable surface (17a) of said guiding element (17) and by the fact that the usable surface of said guiding element (17) interacts with the usable surface (10a) of said rod (10) during the displacement of said guiding element itself from the lowered position to the raised position and with said rod (10) in a retracted configuration.

9. Device (1) according to one or more of the preceding claims, **characterized by** the fact that said second elastic means (19) are arranged externally to said first elastic means (16).

10. Device (1) according to claim 9, **characterized by** the fact that said guiding element (17) defines a housing seat (21) of said rod (10), said rod 10) being inserted within said housing seat (21) in a sliding manner.

11. Device (1) according to claim 10, **characterized by** the fact that the bottom wall (21a) of said housing seat (21) defines at least partly the usable surface (17a) of said guiding element (17) and is adapted to interact with the usable surface (10a) of said rod (10).

12. Device (1) according to claim 10 or 11, **characterized by** the fact that said first elastic means (16) are inserted at least partly within said housing seat (21).

13. Device (1) according to one or more of the preceding claims, **characterized by** the fact that said correction device (2) comprises a containment body (20) of said valve means (5), by the fact that said control lever (6) is arranged outside said containment body (20) and operates on said valve means (5) by means of a control element (22), said control element (22) being associated with said containment body (20) in a sliding manner along a control direction (23) and having a protruding portion (22a) on the outside of the containment body itself and connected to said control lever (6), wherein said control element (22) is movable as a result of the displacement of said control lever (6) between an extended position, wherein said protruding portion (22a) has maximum extension, and a retracted position, wherein said protruding portion (22a) has minimum extension, said control element (22) moving to the extended position and to the retracted position when said control lever (6) is in the position of maximum braking and in the the position of minimum braking, respectively.

14. Device (1) according to claim 13, **characterized by** the fact that said protruding portion (22a) is hinged to said control lever (6).

15. Device (1) according to one or more of the preceding claims, **characterized by** the fact that said control lever (6) has a slit (24), by the fact that said rod (10) has a connecting element (25) inserted within said slit (24) in a sliding manner and by the fact that temporary fastening means (26) are provided of said connecting element (25) with respect to said slit (24).

## Patentansprüche

1. Vorrichtung (1) zum Steuern der Bremsung eines Anhängers mit hydraulischer Federung,
umfassend
- mindestens eine Brems-Korrekturvorrichtung (2), die mit mindestens einem Versorgungsanschluss (3) für ein unter Druck stehendes Fluid und mit mindestens einem Ausgangsanschluss (4) für das unter Druck stehende Fluid versehen ist, die an das Bremssystem eines Anhängers anschließbar sind, Ventilmittel (5), die zwischen dem Versorgungsanschluss (3) und dem Ausgangsanschluss (4) angeordnet sind und dazu ausgebildet sind, den Druck des durch den Ausgangsanschluss (4) strömenden Fluids einzustellen, sowie mindestens einen Steuerhebel (6) der Ventilmittel (5), wobei der Steuerhebel (6) verstellbar ist zwischen einer Position maximaler Bremsung, in der er auf die Ventilmittel (5) so einwirkt, dass der Druck des durch den Ausgangsanschluss (4) strömenden Arbeitsfluids maximal ist, und einer Position minimaler Bremsung, in der er auf die Ventilmittel (5) so einwirkt, dass der Druck des durch den Ausgangsanschluss (4) strömenden Arbeitsfluids minimal ist;
- mindestens einen fluidbetätigten Zylinder (7), der einen Körper (8) und einen Kolben (9) umfasst, der gleitend in dem Körper (8) gelagert und mit mindestens einer Stange (10) versehen ist, wobei zwischen dem Körper (8) und dem Kolben (9) eine Schubkammer (11) gebildet wird, die mit einem Zuführanschluss (12) für den Durchfluss eines unter Druck stehenden Arbeitsfluids versehen und mit der hydraulischen Federung des Anhängers verbindbar ist,
**dadurch gekennzeichnet, dass** die Stange (10) von dem Körper (8) hervorsteht und sich in Abhängigkeit vom Druck des Arbeitsfluids in der Schubkammer (11) zwischen einer ausgefahrenen Konfiguration, in der ihr außerhalb des Körpers (8) liegender Abschnitt maximal ist, und einer eingefahrenen Konfiguration, in der ihr außerhalb des Körpers (8) liegender Abschnitt minimal ist, bewegt;
dadurch, dass die Stange (10) mechanisch mit dem Steuerhebel (6) verbunden ist, um diesen infolge ihrer Verstellung in Richtung der ausgefahrenen Konfiguration in die Position maximaler Bremsung und infolge Verstellung Verstellung in Richtung der eingefahrenen Konfiguration in die Position minimaler Bremsung zu bringen, dadurch, dass der Zylinder (7) erste elastische Mittel (16) umfasst, die dazu ausgebildet sind, der Verstellung der Stange (10) in Richtung der ausgefahrenen Konfiguration entgegenzuwirken, wobei der Zylinder (7) mindestens ein Führungselement (17) umfasst, das gleitend in dem Körper (8) untergebracht und zwischen einer angehobenen Position, in der es nahe an die Oberseite (8a) des Körpers (8) bewegt ist und das Volumen der Schubkammer (11) minimal ist, und einer abgesenkten Position bewegbar ist, in der es nahe an den Boden (8c) des Körpers (8) bewegt ist und das Volumen der Schubkammer (11) maximal ist, sowie dadurch, dass die Stange (10) durch Verschieben mit dem Führungselement (17) beweglich verbunden ist, und
dadurch, dass der Zylinder (7) zweite elastische Mittel (19) umfasst, die dazu ausgebildet sind, der Verstellung des Führungselements (17) von der angehobenen Position in Richtung der abgesenkten Position entgegenzuwirken.

2. Vorrichtung (1) nach Anspruch 1, **dadurch gekennzeichnet, dass** die zweiten elastischen Mittel (19) zwischen dem Boden (8c) des Körpers (8) und dem Führungselement (17) angeordnet sind.

3. Vorrichtung (1) nach einem oder mehreren der vorstehenden Ansprüche, **dadurch gekennzeichnet, dass** das Führungselement (17) und die Stange (10) eine jeweilige nutzbare Fläche (17a, 10a) aufweisen, die der Schubkammer (11) zugewandt ist, und **dadurch gekennzeichnet, dass**, wenn der Druck des in der Schubkammer (11) enthaltenen Arbeitsfluids unter einem vordefinierten Kalibrationswert liegt, die auf das Führungselement (17) und die Stange (10) ausgeübte Kraft größer ist als die von den zweiten elastischen Mitteln (19) auf der gegenüberliegenden Seite ausgeübte Kraft, was die Komprimierung der zweiten elastischen Mittel selbst und die Verstellung des Führungselements (17) in Richtung der abgesenkten Position bewirkt, und jeweils geringer ist als die von den ersten elastischen Mitteln (16) auf der gegenüberliegenden Seite ausgeübte Kraft, die in die Ausgangskonfiguration gebracht sind.

4. Vorrichtung (1) nach Anspruch 3, **dadurch gekennzeichnet, dass** sich das Führungselement (17) bei Schwankungen des Drucks des in der Schubkammer (11) enthaltenen Arbeitsfluids, die unterhalb des Kalibrationswerts (VT) bleiben, infolge des Druckanstiegs bzw. -abfalls in der Schubkammer (11) verstellt in die abgesenkte Position bzw. die angehobene Position verstellt, wobei sich die Stange (10) zusammen blockiert mit dem Führungselement (17) in die eingefahrene Konfiguration bzw. die ausgefahrene Konfiguration bewegt.

5. Vorrichtung (1) nach einem oder mehreren der vorstehenden Ansprüche, **dadurch gekennzeichnet, dass** die ersten elastischen Mittel (16) zwischen dem Körper (8) und der Stange (10) angeordnet sind.

6. Vorrichtung (1) nach einem oder mehreren der Ansprüche 3 bis 5, **dadurch gekennzeichnet, dass**, wenn der Druck des in der Schubkammer (11) enthaltenen Arbeitsfluids den Kalibrationswert (VT) erreicht, sich die Stange (10) infolge der Verstellung des Führungselements (17) in die abgesenkte Position in der eingefahrenen Konfiguration befindet, und dadurch, dass, wenn der Druck des in der Schubkammer (11) enthaltenen Arbeitsfluids den Kalibrationswert (VT) überschreitet, die auf die Stange (10) ausgeübte Kraft die von den ersten elastischen Mitteln (16) auf der gegenüberliegenden Seite ausgeübte Kraft übersteigt und sich die Stange (10) durch Komprimieren der ersten elastischen Mittel (16) in Richtung der ausgefahrenen Position verstellt, wobei das Führungselement (17) in der abgesenkten Position verbleibt.

7. Vorrichtung (1) nach Anspruch 6, **dadurch gekennzeichnet, dass**, wenn der Druck des in der Schubkammer (11) enthaltenen Arbeitsfluids auf Null eingestellt ist und sich das Führungselement (17) in der abgesenkten Position befindet, die auf das Führungselement (17) ausgeübte Kraft geringer ist als die von den zweiten elastischen Mitteln (19) auf der gegenüberliegenden Seite ausgeübte Kraft, die sich ausdehnen, indem sie das Führungselement selbst in die angehobene Position bringen.

8. Vorrichtung (1) nach einem oder mehreren der vorstehenden Ansprüche, **dadurch gekennzeichnet, dass** die nutzbare Fläche der Stange (10) der nutzbaren Fläche (17a) des Führungselements (17) zugewandt ist und dass die nutzbare Fläche des Führungselements (17) mit der nutzbaren Fläche (10a) der Stange (10) während der Verstellung des Führungselements selbst von der abgesenkten Position in die angehobene Position und bei in eingezogener Konfiguration befindlicher Stange (10) zusammenwirkt.

9. Vorrichtung (1) nach einem oder mehreren der vorstehenden Ansprüche, **dadurch gekennzeichnet, dass** die zweiten elastischen Mittel (19) außerhalb der ersten elastischen Mittel (16) angeordnet sind.

10. Vorrichtung (1) nach Anspruch 9, **dadurch gekennzeichnet, dass** das Führungselement (17) einen Aufnahmesitz (21) für die Stange (10) bildet, wobei die Stange (10) gleitend in den Aufnahmesitz (21) eingesetzt ist.

11. Vorrichtung (1) nach Anspruch 10, **dadurch gekennzeichnet, dass** die Bodenwand (21a) des Aufnahmesitzes (21) zumindest teilweise die nutzbare Fläche (17a) des Führungselements (17) definiert und dazu ausgebildet ist, mit der nutzbaren Fläche (10a) der Stange (10) zusammenzuwirken.

12. Vorrichtung (1) nach Anspruch 10 oder 11, **dadurch gekennzeichnet, dass** die ersten elastischen Mittel (16) zumindest teilweise in den Aufnahmesitz (21) eingesetzt sind.

13. Vorrichtung (1) nach einem oder mehreren der vorstehenden Ansprüche, **dadurch gekennzeichnet, dass** die Korrekturvorrichtung (2) einen Aufnahmekörper (20) für die Ventilmittel (5) umfasst, dass der Steuerhebel (6) außerhalb des Aufnahmekörpers (20) angeordnet ist und mittels eines Steuerelements (22) auf die Ventilmittel (5) einwirkt, wobei das Steuerelement (22) dem Aufnahmekörper (20) entlang einer Steuerrichtung (23) gleitend zugeordnet ist und einen vorstehenden Abschnitt (22a) an der Außenseite des Aufnahmekörpers selbst aufweist und mit dem Steuerhebel (6) verbunden ist, wobei das Steuerelement (22) infolge der Verstellung des Steuerhebels (6) zwischen einer ausgefahrenen Position, in der der vorstehende Abschnitt (22a) seine maximale Ausdehnung aufweist, und einer eingefahrenen Position, in der der vorstehende Abschnitt (22a) seine minimale Ausdehnung aufweist, bewegbar ist, wobei sich das Steuerelement (22) in die ausgefahrene Position bzw. in die eingefahrene Position bewegt, wenn sich der Steuerhebel (6) in der Position maximaler Bremsung bzw. in der Position minimaler Bremsung befindet.

14. Vorrichtung (1) nach Anspruch 13, **dadurch gekennzeichnet, dass** der vorstehende Abschnitt (22a) am Steuerhebel (6) angelenkt ist.

15. Vorrichtung (1) nach einem oder mehreren der vorstehenden Ansprüche, **dadurch gekennzeichnet, dass** der Steuerhebel (6) einen Schlitz (24) aufweist, dass die Stange (10) ein Verbindungselement (25) aufweist, das gleitend in den Schlitz (24) eingeführt ist, und dass Mittel (26) zur vorübergehenden Befestigung des Verbindungselements (25) in Bezug auf den Schlitz (24) vorgesehen sind.

## Revendications

1. - Dispositif de commande (1) du freinage d'une remorque à suspension hydraulique, comprenant :
- au moins un dispositif de correction de freinage (2) comportant moins un orifice d'alimentation (3) d'un fluide sous pression et au moins un orifice de sortie (4) du fluide sous pression apte à être relié au système de freinage d'une remorque, des moyens de soupape (5) placés entre ledit orifice d'alimentation (3) et ledit orifice de sortie (4) et conçus pour régler la pression du fluide s'écoulant à travers ledit orifice de sortie (4), et au moins un levier de commande (6) desdits moyens de soupape (5), ledit levier de commande (6) étant mobile entre une position de freinage maximal, dans laquelle il agit sur lesdits moyens de soupape (5) de telle sorte que la pression du fluide de travail s'écoulant à travers ledit orifice de sortie (4) soit maximale, et une position de freinage minimal, dans laquelle il agit sur lesdits moyens de soupape (5) de telle sorte que la pression du fluide de travail s'écoulant à travers ledit orifice de sortie (4) soit minimale ;
- au moins un vérin actionné par fluide (7) comprenant un corps (8) et un piston (9) logé à l'intérieur dudit corps (8) de manière coulissante et comportant au moins une tige (10), une chambre de poussée (11) étant définie entre ledit corps (8) et ledit piston (9), laquelle chambre comporte un orifice de refoulement (12) pour l'écoulement d'un fluide de travail sous pression et apte à être relié à la suspension hydraulique de la remorque,
**caractérisé par le fait que** ladite tige (10) fait saillie à partir du corps (8), se déplaçant entre une configuration déployée, dans laquelle sa partie à l'extérieur du corps (8) est maximale, et une configuration rétractée, dans laquelle sa partie à l'extérieur du corps (8) est minimale, selon la pression du fluide de travail dans ladite chambre de poussée (11) ;
**par le fait que** ladite tige (10) est reliée mécaniquement audit levier de commande (6) pour amener celui-ci dans la position de freinage maximal à la suite de son déplacement vers la configuration déployée et dans la position de freinage minimal à la suite de son déplacement vers la configuration rétractée,
**par le fait que** ledit vérin (7) comprend des premiers moyens élastiques (16) conçus pour contrer le déplacement de ladite tige (10) vers la configuration déployée, ledit vérin (7) comprenant au moins un élément de guidage (17) logé à l'intérieur dudit corps (8) de manière coulissante et mobile entre une position relevée, dans laquelle il est déplacé à proximité de la partie supérieure (8a) dudit corps (8) et où le volume de ladite chambre de poussée (11) est minimal, et une position abaissée, dans laquelle il est déplacé à proximité de la partie inférieure (8c) dudit corps (8) et où le volume de ladite chambre de poussée (11) est maximal, et **par le fait que** ladite tige (10) est associée de manière mobile par déplacement audit élément de guidage (17), et
**par le fait que** ledit vérin (7) comprend des seconds moyens élastiques (19) conçus pour contrer le déplacement dudit élément de guidage (17) de la position relevée vers la position abaissée.

2. - Dispositif (1) selon la revendication 1, **caractérisé par le fait que** lesdits seconds moyens élastiques (19) sont placés entre la partie inférieure (8c) dudit corps (8) et ledit élément de guidage (17).

3. - Dispositif (1) selon une ou plusieurs des revendications précédentes, **caractérisé par le fait que** ledit élément de guidage (17) et ladite tige (10) présentent une surface utile correspondante (17a, 10a) faisant face à ladite chambre de poussée (11), et **caractérisé par le fait que**, lorsque la pression du fluide de travail contenu dans la chambre de poussée (11) est inférieure à une valeur d'étalonnage prédéfinie, la force exercée sur ledit élément de guidage (17) et sur ladite tige (10) est supérieure à la force exercée sur le côté opposé par lesdits seconds moyens élastiques (19), provoquant la compression desdits seconds moyens élastiques eux-mêmes et le déplacement dudit élément de guidage (17) vers la position abaissée, et inférieure, respectivement, à la force exercée sur le côté opposé par lesdits premiers moyens élastiques (16), qui sont amenés à la configuration de repos.

4. - Dispositif (1) selon la revendication 3, **caractérisé par le fait que**, lorsque la pression du fluide de travail contenu dans ladite chambre de poussée (11) varie, en restant inférieure à ladite valeur d'étalonnage (V_{T}), ledit élément de guidage (17) se déplace vers la position abaissée et vers la position relevée à la suite de l'augmentation et de la diminution de pression, respectivement, dans ladite chambre de poussée (11), ladite tige (10) se déplaçant de manière bloquée conjointement avec ledit élément de guidage (17) vers la configuration rétractée et vers la configuration déployée, respectivement.

5. - Dispositif (1) selon une ou plusieurs des revendications précédentes, **caractérisé par le fait que** lesdits premiers moyens élastiques (16) sont placés entre ledit corps (8) et ladite tige (10).

6. - Dispositif (1) selon une ou plusieurs des revendications 3 à 5, **caractérisé par le fait que**, lorsque la pression du fluide de travail contenu dans ladite chambre de poussée (11) atteint ladite valeur d'étalonnage (V_{T}), ladite tige (10) se trouve dans la configuration rétractée suite au déplacement dudit élément de guidage (17) vers la position abaissée, et **par le fait que**, lorsque la pression du fluide de travail contenu dans ladite chambre de poussée (11) dépasse ladite valeur d'étalonnage (V_{T}), la force exercée sur ladite tige (10) dépasse la force exercée sur le côté opposé par lesdits premiers moyens élastiques (16) et ladite tige (10) se déplace vers la position déployée en comprimant lesdits premiers moyens élastiques (16), ledit élément de guidage (17) restant dans la position abaissée.

7. - Dispositif (1) selon la revendication 6, **caractérisé par le fait que**, lorsque la pression du fluide de travail contenu dans ladite chambre de poussée (11) est définie à zéro et que ledit élément de guidage (17) se trouve dans la position abaissée, la force exercée sur ledit élément de guidage (17) est inférieure à celle exercée sur le côté opposé par les seconds moyens élastiques (19) qui s'étendent en amenant l'élément de guidage lui-même vers la position relevée.

8. - Dispositif (1) selon une ou plusieurs des revendications précédentes, **caractérisé par le fait que** la surface utile de ladite tige (10) est tournée vers la surface utile (17a) dudit élément de guidage (17) et **par le fait que** la surface utile dudit élément de guidage (17) interagit avec la surface utile (10a) de ladite tige (10) lors du déplacement dudit élément de guidage lui-même de la position abaissée à la position relevée et avec ladite tige (10) dans une configuration rétractée.

9. - Dispositif (1) selon une ou plusieurs des revendications précédentes, **caractérisé par le fait que** lesdits seconds moyens élastiques (19) sont disposés à l'extérieur desdits premiers moyens élastiques (16).

10. - Dispositif (1) selon la revendication 9, **caractérisé par le fait que** ledit élément de guidage (17) définit un siège de logement (21) de ladite tige (10), ladite tige (10) étant insérée dans ledit siège de logement (21) de manière coulissante.

11. - Dispositif (1) selon la revendication 10, **caractérisé par le fait que** la paroi inférieure (21a) dudit siège de logement (21) définit au moins en partie la surface utile (17a) dudit élément de guidage (17) et est conçue pour interagir avec la surface utile (10a) de ladite tige (10).

12. - Dispositif (1) selon la revendication 10 ou 11, **caractérisé par le fait que** lesdits premiers moyens élastiques (16) sont insérés au moins en partie à l'intérieur dudit siège de logement (21).

13. - Dispositif (1) selon une ou plusieurs des revendications précédentes, **caractérisé par le fait que** ledit dispositif de correction (2) comprend un corps de confinement (20) desdits moyens de soupape (5), **par le fait que** ledit levier de commande (6) est disposé à l'extérieur dudit corps de confinement (20) et agit sur lesdits moyens de soupape (5) au moyen d'un élément de commande (22), ledit élément de commande (22) étant associé audit corps de confinement (20) de manière coulissante le long d'une direction de commande (23) et comportant une partie en saillie (22a) à l'extérieur du corps de confinement lui-même et reliée audit levier de commande (6), dans lequel ledit élément de commande (22) est mobile à la suite du déplacement dudit levier de commande (6) entre une position déployée, dans laquelle ladite partie en saillie (22a) présente une extension maximale, et une position rétractée, dans laquelle ladite partie en saillie (22a) présente une extension minimale, ledit élément de commande (22) se déplaçant vers la position déployée et vers la position rétractée lorsque, respectivement, ledit levier de commande (6) se trouve dans la position de freinage maximal et dans la position de freinage minimal.

14. - Dispositif (1) selon la revendication 13, **caractérisé par le fait que** ladite partie en saillie (22a) est articulée sur ledit levier de commande (6).

15. - Dispositif (1) selon une ou plusieurs des revendications précédentes, **caractérisé par le fait que** ledit levier de commande (6) comporte une fente (24), **par le fait que** ladite tige (10) comporte un élément de liaison (25) inséré dans ladite fente (24) de manière coulissante et **par le fait que** des moyens de fixation temporaire (26) sont prévus pour ledit élément de liaison (25) par rapport à ladite fente (24).
